# EUROPÄISCHE PATENTSCHRIFT

(11) **EP 0 821 905 B1**
(45) Veröffentlichungstag und Bekanntmachung des Hinweises auf die Patenterteilung: **19.01.2000**
(21) Anmeldenummer: 97102998.8
(22) Anmeldetag: 25.02.1997
(51) Int. Cl.: A47J 27/21

(54) **Wasserkochgerät**
Water boiling vessel
Bouilloire

(30) Priorität: 03.08.1996 DE 29613481 U
(43) Veröffentlichungstag der Anmeldung: 04.02.1998
(73) Patentinhaber: Fritz Eichenauer GmbH & Co. KG, D-76870 Kandel (DE)
(72) Erfinder: Ohnmacht, Helmut, 76870 Kandel (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-U- 8 915 662
- DE-U- 9 102 908
- DE-U- 9 411 507
- FR-A- 2 744 000
- GB-A- 486 318

## Beschreibung

Die Erfindung bezieht sich auf ein Wasserkochgerät, bestehend aus einer Basisstation, welche an die Netzspannung angelegt ist und einem auf der Basisstation abgestellten, mit einem Handgriff versehenen abnehmbaren Kessel, mit einer zugeordneten elektrischen Heiz- und Temperaturregelvorrichtung an der Unterseite des Kesselbodens, die beim positionsgenauen Abstellen des Kessels auf der Basisstation mit der dort vorhandenen Steckerkupplung elektrisch leitend verbunden ist.

Bei bekannten elektrisch beheizten Kochfäßen, insbesondere jene zur Beheizung von Trinkwasser, bei denen der Kessel von der Basisstation abnehmbar und zum Zwecke der Erhitzung der Flüssigkeit wieder aufgesetzt wird, waren in der Vergangenheit die Rohrheizkörper zur Beheizung der Flüssigkeit in das Behälterinnere gelegt. Durch den direkten Wärmeübergang vom Rohrheizkörper zu der zu beheizenden Flüssigkeit wird einerseits ein optimaler Wärmeaustausch erzielt, andererseits sind bei dieser Ausführungsart erhebliche Einschränkungen und Aufwendungen bei der Benutzung erforderlich. Die Oberfläche des in die Flüssigkeit hineinragenden Rohrheizkörpers überzieht sich, je nach Härte und Kalkanteil des Wassers, mit Ablagerungen, so daß häufige Reinigungsprozeduren notwendig werden, um Überhitzungen des Heizelementes zu verhindern. In der Regel handelt es sich bei dem in die Flüssigkeit hineinragenden Rohrheizkörper um spezifisch hoch belastete Elemente, wodurch die Ablagerungen noch begünstigt werden. Die Beheizungen dieser Wasserkochgeräte sind dann besonders störanfällig und werden häufig dann gegen Überhitzung unbrauchbar, wenn sie im "Trockenlauf" betrieben werden. Außerdem sind ständige Beschädigungen des aus Kunststoff bestehenden Wasserkessels sowie den daran angebrachten Kunststoffteilen durch Überhitzung zu befürchten, da die örtlich auftretenden Temperaturen die Verträglichkeit des verwendeten Kunststoffes am Wasserkessel weit übersteigen können und somit eine Reparatur der Heizvorrichtung durch den Austausch des Heizelementes nicht mehr möglich ist. Dadurch wird für den Benutzer jeweils immer wieder die Anschaffung eines ganzen Gerätes erforderlich, was letztendlich eine erhebliche finanzielle Aufwendung und wiederkehrende Probleme bei Entsorgung der beschädigten unbrauchbaren Geräte darstellt.

Eine weitere Ausführungsform für ein Wasserkochgefäß, bei dem die oben genannten Nachteile nicht auftreten, ist aus der EP A 0 285 839 bekannt geworden, bei dem der gesamte Rohrheizkörper außerhalb des Wasserkessels liegt. Diese Anordnung der Rohrheizkörper außerhalb des Wasserkessels ist ebenso in der FR-PA 93 09 467 sowie in der GBM-Anmeldung 93 07 145.0 verwirklicht.

Bei all diesen neueren Ausführungsformen ist im Prinzip ein metallischer Behälterboden vorgesehen, auf dem eine weitere metallische Heizplatte mit dem Rohrheizkörper vorhanden ist. Die thermische Verbindung dieser Einzelteile untereinander wird durch Reibschweißen oder durch Lötung vorgenommen.

Bei diesen Ausführungsformen befindet sich der Boden des Wasserbehälters mit der Heizeinheit in direktem thermischen Kontakt zu der Außenwand des Kunststoffbehälters als Wasserkessel. Zum Schutz der Kunststoffbehälterwand und beim Einschalten des Wasserkessels ohne der zu erhitzenden Flüssigkeit, d. h. "beim Trockengehen" sind Temperaturbegrenzersysteme, bestehend aus einem oder mehreren Thermostaten am Boden der Vorratsbehälter zur Begrenzung des Temperaturanstieges angebracht. Im Falle des "Trockengehens" ist der Wärmefluß zum Gehäuse am Kunststoff zeitlich gesehen wesentlich schneller als die Abschalttemperatur den Thermostaten initiieren kann. Dieser Nachteil wird in der EP-PA 0 285 839 dadurch behoben, daß eine im Boden umlaufende Rinne an der Berührungsstelle zur Kunststoffbehälterwand angeformt und somit Restflüssigkeit bis zum Abschalten des Temperaturbegrenzers vorhanden ist, die verhindert, daß an der Kunststoffbehälterwand die Temperatur unzulässig ansteigt. Diese am Boden angeformte Rinne kann nur dann die ihr zugedachte Aufgabe erfüllen, wenn die Restwassermenge vorhanden ist, wie dies im normalen Betrieb zweifellos vorkommt. Wenn der Wasserbehälter z. B. durch Ausgießen des erhitzten Wassers entleert wird, wird auch die notwendige Restwassermenge in der umlaufenden Rinne nicht mehr vorhanden sein, so daß die Überhitzung und die damit verbundene Zerstörung des Gehäuses aus Kunststoff nicht ganz auszuschließen ist.

Die konzentrierte Leistung in dem DE GBM 94 11 507.9 auf der zusätzlichen Wärmediffusionsplatte, weist im unsachgemäßem Gebrauch, wie oben geschildert, die gleichen Nachteile auf, indem die Gefahr der Zerstörung des Kunststoffes nicht ausgeschlossen werden kann.

Ein weiterer Nachteil bei den bekannten Heizsystemen für Wasserkocher besteht darin, daß bei den beschriebenen gelöteten, gepreßten oder genieteten Verbindungen für die Reglereinheiten, ein einfaches Austauschen im Fehlerfalle nicht möglich ist. Es ist dem Fachmann auch bekannt, daß bei flächigen Lötungen, wie in der Beschreibung zum GBM 94 11 507.9 erläutert und in den dazugehörigen Figuren dargestellt ist, eine durchgehende und gleichmäßige Verbindung nicht immer gewährleistet ist, so daß bei der Qualitätskontrolle hohe Ausschußquoten anfallen und die Gewähr für einen optimalen und konstant definierten Wärmefluß, einmal zur Temperaturregeleinrichtung und zum anderen Mal zum Boden des Flüssigkeitsbehälters, nicht übernommen werden kann.

Die weiteren bekannten Verbindungen der Funktionsteile, wie Bodenplatte, Rohrheizkörper und Regler untereinander sind mit den gleichen oben genannten Nachteilen behaftet, da unterschiedliche und permanente Wärmeausdehnungsprozesse mechanisch hergestellte Verbindungen lockern und letztendlich lösen. Im Stadium der Lockerung wird der Temperaturfluß unterschiedlich beeinflußt, womit ein geregelter Heizvorgang und ein garantierter Schutz der Behälterwand aus Kunststoff nicht mehr gewährleistet ist.
Die Aufgabe der Erfindung besteht darin, die verschiedenen oben erwähnten Nachteile zu vermeiden und ein neuartiges elektrisch beheiztes Wasserkochgerät, bestehend aus einer Basisstation, welche an der Netzspannung anliegt und einen auf der Basisstation abgestellten Wasserbehälter mit einer Außenwand aus Kunststoff und einer dem abnehmbaren Kessel (Wasserbehälter) zugeordneten elektrischen Heiz- und Temperaturregeleinrichtung mit der Möglichkeit eines einfachen Austausches der Regler- und Steckverbindung am Kessel (Wasserbehälter) zu schaffen, welches darüber hinaus eine hohe Leistung zur schnellen Aufheizung der Flüssigkeit besitzt und in einfacher und kostengünstiger Weise herzustellen ist.

Diese Aufgabe wird erfindungsgemäß zunächst dadurch gelöst, daß auf einer metallischen Heizplatte, vorzugsweise aus Edelstahl, die als Boden des Kochbehälters aus Kunststoff an diesem den unteren Abschluß bildet und mit ihm in direkter Verbindung steht, eine weitere Wärmeverteilerplatte aus gut wärmeleitendem Material, auf welcher wiederum an der Peripherie ein Rohrheizkörper mit hoher Leistung angeordnet ist und dies als Einheit zusammen gut wärmeleitend durch Lötung verbunden ist.

Durch die besondere Ausgestaltung der Wärmeverteilerplatte ist die Gewähr für eine homogene, gut wärmeleitende, dauerhafte Verbindung gegeben, womit es möglich ist, eine höhere Wärmemenge in kurzer Zeit an die Heizplatte des Wasserbehälters zu leiten. In der Wärmverteilerplatte werden Bohrungen oder radial angeordnete Einschnitte vorgesehen, wodurch die Wärmeverteilerplatte in segmentartige Lötflächen aufgeteilt wird. Durch diese Aufteilung kann das Flußmittel bei der Lötung in einfacher Weise ausdampfen, so daß eine einwandfreie, gut wärmeleitende und dauerhafte Verbindung zwischen den Lötteilen zustande kommt. Über die vorgenommenen Durchbrechungen, ob Bohrung oder Ausnehmung, der Wärmeverteilerplatte ist weiterhin eine einfache optische Kontrolle der Lötqualität möglich.

Darüber hinaus kann durch die segmentartige Aufteilung bzw. der zentrischen Aussprung in der Plattenmitte, der Wärmefluß gezielt zu den Berührungs- und Meßstellen der Regeleinheit geführt werden, wodurch eine Überhitzung des Kunststoffbehälters beim "Trockenlauf" verhindert wird. Nachdem die Wärmeleitungsvorgänge gezielt zu den exponierten Bedarfstellen geleitet werden kann, ist die Installation eines Rohrheizkörpers mit relativ hoher Leistung (> 2000 W) möglich, wodurch die Aufheizzeit des Wassers im Kochgefäß ganz erheblich reduziert wird.

Durch eine Versuchsreihe wurde festgestellt, daß bei Verwendung einer Steck- und Regeleinheit, wie sie handelsüblich durch die Firma STRIX hergestellt wird, bei Heizplatten mit einem Durchmesser von ca. 110 mm bis 120 mm sich ein Verhältnis von 1:10 ausgesparter zur vorhandenen Restfläche der Wärmeverteilerplatte als bevorzugt und günstig erweist.

Zur Befestigung der Steck- und Reglereinheit sind sogenannte "Nürnberger"-Befestigungslaschen und konkav geformte, an der Platte herausgedrückte Dome vorgesehen, durch die ein einfaches montagefreundliches Austauschen der Steck- und Regeleinheit im Reparaturfalle möglich ist.

Weitere Ausführungsbeispiele der Erfindung sind in den Zeichnungen dargestellt und werden im folgenden näher erläutert.

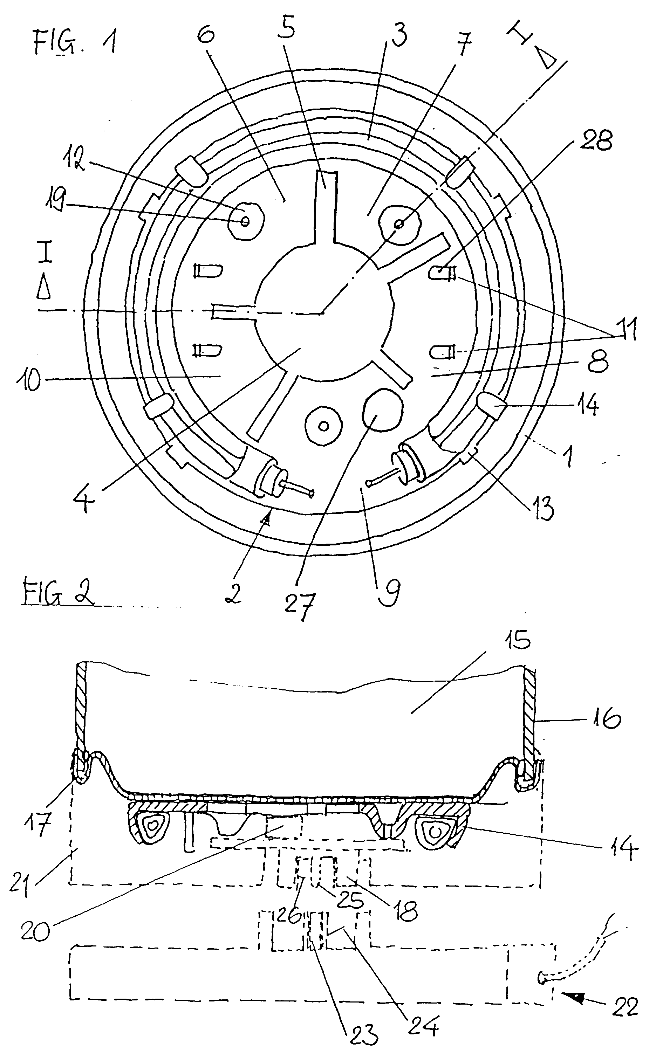

In der Zeichnung zeigen:
***Figur 1:***
   Eine erfindungsgemäße elektrische Heizvorrichtung ohne Steck- und Reglereinheit in der Draufsicht.
***Figur 2:***
   Einen Schnitt gemäß - in Figur 1 mit gestrichelter Darstellung der Steck- und Reglereinheit sowie der Basisstation.

In der Figur 1 ist auf dem Kesselboden (Heizboden) (1) die Wärmeverteilerplatte (2) mit dem Rohrheizkörper (3) homogen zusammen verlötet. Vom Kreisausschnitt (4) im Zentrum des Heizbodens (1) sind radiale Ausnehmungen (5) angeordnet, durch die die Wärmeverteilerplatte (2) in Segmentteile (6), (7), (8), (9), (10) aufgeteilt wird. Durch die Ausnehmungen (5) ist die flächige Verlötung der Segmentteile (6), (7), (8), (9), (10) gewährleistet, da hier beim Löten der Lot Dampf entweichen kann. Über die Größe bzw. Ausbildung der Segmentteile (6) bis (10) kann weiterhin der Wärmefluß und die Intensität so beeinflußt werden, um die nicht dargestellten Regler- oder Schalterteile gezielt zu initiieren. Die aus der Wärmeverteilerplatte (2) herausgestanzten und abgewinkelten Laschen (11) und die domartigen Erhebungen (12) dienen der Befestigung des nicht dargestellten Steck- und Reglerteiles. Durch die Anordnung der Laschen (11) und der domartigen Erhebungen (12) kann das nicht dargestellte Steck- und Reglerteil im Reparaturfall in einfacher Weise ausgebaut und ersetzt werden. Die an der Wärmeverteilerplatte (2) angeordneten Laschen (13), (14) dienen der Fixierung des Rohrheizkörpers (3) auf der Wärmeverteilerplatte (2) und der Wärmeverteilerplatte (2) selbst wiederum auf dem Heizboden (1).

Im Bedarfsfall können zusätzliche Bohrungen (27) in der Wärmeverteilerplatte (2) angebracht werden, um die Lötqualität optisch zu bewerten. Im Bereich der Kontaktflächen für die nicht dargestellten Regler ist eine Bohrung (27) bzw. Ausnehmung (5) nicht vorgesehen. Der Grund ist, daß beim Löten Flußmittel oder auch Lot austreten kann, welches die gezielte Wärmeleitung zum Regler unterschiedlich beeinflussen würde.

Bei gewählter Reglerposition im Bereich der Laschen (11), welche aus der Wärmeverteilerplatte (2) herausgestanzt sind, werden die Stanzöffnungen (28) wieder verstemmt, damit kein Fluß- oder Lötmittel austreten kann.

Die Figur 2 zeigt den Schnitt in Figur 1 gemäß der Linie I-I . Der in der Figur 2 nicht vollständig dargestellte Kessel (Wasserbehälter) (15) mit der Außenwand (16) aus Kunststoff ist in die vorgeformte Aufnahme Ringnut (17) am Kesselboden (Heizboden) (1) so eingesetzt, daß eine zuverlässige Abdichtung und Befestigung gegeben ist. An der Unterseite des Kesselbodens (Heizbodens) (1) ist die Wärmeverteilerplatte (2) mit dem Rohrheizkörper (3) zusammen gut wärmeleitend verlötet. Die an der Wärmeverteilerplatte (2) angeordneten Laschen (13) und (14) sind als Fixierung für die Rohrheizkörper (3) und der Wärmeverteilerplatte (2) auf dem Kesselboden (Heizboden) (1) vorgesehen. Zur Aufnahme des gestrichelt dargestellten Steck- und Reglerteiles (18) sind einmal domartige Erhebungen (12) mit einer Bohrung (19) aus dem Material der Wärmeverteilerplatte (2) herausgezogen. Durch die Bohrung (19) wird die Ausdampfung des Flußmittels beim Löten begünstigt. Um eine weitere Befestigungsmöglichkeit des Steck- und Reglerteiles (18) im Reparaturfall bzw. für die Erneuerung zu schaffen, sind abgewinkelte Ausnehmungen (11) als sogenannte "Nürnberger" aus der Wärmeverteilerplatte (2) herausgearbeitet. Durch den Regler (20) werden Überhitzungen an der Außenwand (16) des Kessels (Wasserbehälters) (15) verhindert. Der Regler (20) unterbricht auch dann die Stromzufuhr zum Rohrheizkörper (3), wenn die Kochtemperatur des Wassers im Behälter (15) erreicht ist bzw. der Betrieb ohne zu erhitzende Flüssigkeit im Kessel (Wasserbehälter) (15), ein sogenannter "Trockenlauf" versucht werden sollte. Für die Funktion des Reglers (20) ist es sehr wichtig, daß die vom Rohrheizkörper (3) über die Wärmeverteilerplatte (2) abfließende Wärmemenge in kurzer Zeit zur Position des Reglers (20) geführt wird, damit die Stromzufuhr geregelt werden kann. Um diese Forderung zu gewährleisten, sind in der Wärmeverteilerplatte (2) Ausnehmungen (5) vorgesehen, die die Wärmeverteilerplatte (2) wiederum in Segmente (6) bis (10) einteilt. Die Größe der Segmente (6) bis (10) ist abhängig von der Abschalttemperatur des verwendeten Reglers (20) und der vorhandenen Leistung des vorgesehenen Rohrheizkörpers (3). Die segmentartige Aufteilung der Wärmeverteilerplatte (2) durch die Ausnehmungen (5) ermöglicht darüber hinaus das Ausdampfen des Lotes beim Auflöten der Wärmeverteilerplatte (2) auf den Kesselboden (Heizboden) (1). Dadurch ist eine gleichmäßige und kontrollierte Verlötung gewährleistet, was auch eine Bedingung zum vorher zu bestimmenden Wärmefluß ist.
Durch eine umfangreiche Versuchsreihe hat sich herausgestellt, daß dann die Bedingungen des Wärmeflusses der Wärmemenge vom Rohrheizkörper (3) zum Regler (20) erfüllt sind, wenn die Fläche der zentrischen Öffnung (4) im Verhältnis von 1:10 zur Restfläche der Wärmeverteilerplatte (2) gewählt wird. Das gestrichelt dargestellt Steck- und Reglerteil (18), welches durch die ebenfalls gestrichelt dargestellte äußere Wandung (21) den unteren Teil des von der Basisstation (22) abnehmbaren Kessels (Wasserbehälters) (15) dargestellt, wird über die Kontakte (23) und (24) beim Aufsetzen durch die stromleitende Verbindung mit dem Stift (25) und der Kontaktfläche (26) mit Strom aus dem Netz versorgt.

## Patentansprüche

1. Wasserkochgerät, bestehend aus einer Basisstation (22), welche an die Netzspannung angelegt ist und einem auf der Basisstation abgestellten mit einem Handgriff versehenen, abnehmbaren Kessel (15), mit einer elektrischen Heiz- und Temperaturregelvorrichtung an der Unterseite des Kesselbodens (1), die beim positionsgenauen Abstellen des Kessels auf der Basisstation mit der dort vorhandenen Steckerkupplung elektrisch leitend verbunden ist, mit einer Wärmeverteilerplatte (2) und einem deren äußeren Kontur folgenden Rohrheizkörper (3), dadurch gekennzeichnet, daß die Wärmeverteilerplatte (2) eine zentrische Aussparung (4) im Verhältnis 1 : 10 zur Resffläche der Wärmeverteilerplatte (2) hat und von der zentrischen Aussparung (4) radial angeordnete Ausnehmungen (5) ausgehen und die Wärmeverteilerplatte (2) in Segmente (6 - 10) in unterschiedliche Flächengrößen aufteilt, und daß der Rohrheizkörper (3) auf der Wärmeverteilerplatte (2) aufgelötet ist.

2. Wasserkochgerät nach Anspruch 1, dadurch gekennzeichnet, daß auf der Wärmeverteilerplatte (2) zusätzliche Bohrungen (27) in den Segmentteilen (6 - 10) vorhanden sind.

3. Wasserkochgerät nach Anspruch 1 und 2, dadurch gekennzeichnet, daß auf der Wärmeverteilerplatte (2) domartige Erhebungen (12) mit Bohrungen (19) sowie Aufbiegungen (11) zur wahlweisen Aufnahme und Befestigung des Steck- und Reglerteiles (18) vorhanden sind.

4. Wasserkochgerät nach Anspruch 3, dadurch gekennzeichnet, daß die Stanzöffnungen (28) in der Wärmeverteilerplatte (2) nach dem Herausbiegen der Befestigungslaschen (11) verpreßt und geschlossen werden.

## Claims

1. Water boiling vessel, comprising a base station (22), which is applied to mains voltage and a removable boiler (15), provided with a handle and placed on the base station, having an electric heating and temperature regulating device on the underside of the boiler bottom (1), which is electrically conductively connected with the plug coupling provided there when the boiler is correctly positioned on the base station and having a heat distributing plate (2) and a tubular heater (3) following the outer contour thereof, characterized in that the heat distributing plate (2) has a central opening (4) in a ratio of 1:10 to the remaining surface of the heat distributing plate (2) and from the central opening (4) emanate radially positioned recesses (5) and the heat distributing plate (2) is subdivided into segments (6-10) with different surface sizes and that the tubular heater (3) is soldered to the heat distributing plate (2).

2. Water boiling vessel according to claim 1, characterized in that there are additional bores (27) in the segment parts (6-10) on the heat distributing plate (2).

3. Water boiling vessel according to claims 1 and 2, characterized in that on the heat distributing plate (2) are provided dome-like elevations (12) with bores (19) and upward bends (11) for the as desired reception and fastening of the plug and controller part (18).

4. Water boiling vessel according to claim 3, characterized in that the punched openings (28) in the heat distributing plate (2) are pressed and closed following the bending out of the fastening clips (11).

## Revendications

1. Bouilloire comprenant une base réceptrice (22) reliée au réseau électrique et un récipient amovible posé sur la base réceptrice et muni d'une poignée, présentant un dispositif électrique de réglage du chauffage et de la température en sous-face du fond du récipient (1) qui, lorsque l'on positionne exactement le récipient sur la base réceptrice se trouve relié électriquement par le connecteur électrique existant sur cette base réceptrice, et présentant une plaque dissipatrice de chaleur (2) et un corps de chauffe tubulaire (3) qui suit le contour extérieur de la plaque dissipatrice de chaleur (2), caractérisée en ce que la plaque dissipatrice de chaleur (2) présente un évidement central (4) dans un rapport de 1 à 10 par rapport à la surface restante de la plaque dissipatrice de chaleur (2), en ce que des rainures (5) s'étendent radialement à partir de l'évidement central (4) et divisent la plaque dissipatrice de chaleur (2) en segments (6-10) de surfaces différentes, et en ce que le corps de chauffe tubulaire (3) est brasé sur la plaque dissipatrice de chaleur (2).

2. Bouilloire selon la revendication 1, caractérisée en ce que la plaque dissipatrice de chaleur (2) présente des perçages (27) supplémentaires dans les segments (6-10).

3. Bouilloire selon les revendications 1 ou 2, caractérisée en ce que la plaque dissipatrice de chaleur (2) présente des saillies (12) en forme de dôme avec des perçages (19) ainsi que des languettes dépliables (Il) pour la réception et la fixation sélectives de la pièce de connexion et de réglage (18).

4. Bouilloire selon la revendication 3, caractérisée en ce que les découpes (28) de la plaque dissipatrice de chaleur (2) sont pressées et fermées après conformation par pliage des languettes dépliables de fixation.
